# EUROPEAN PATENT SPECIFICATION

(11) **EP 1 136 705 B1**
(45) Date of publication and mention of the grant of the patent: **03.12.2003**
(21) Application number: 01302677.8
(22) Date of filing: 22.03.2001
(51) Int. Cl.: F16B 13/08

(54) **Anchoring dowel**
Verankerungsdübel
Cheville d'ancrage

(30) Priority: 22.03.2000 FR 0003643
(43) Date of publication of application: 26.09.2001
(73) Proprietor: Black & Decker Inc., Newark Delaware 19711 (US)
(72) Inventor: Anquetin, Robert, 91690 Fontaine la Riviere (FR)
(74) Representative: Bell, Ian Stephen

(56) References cited:
- EP-A- 0 685 656
- EP-A- 0 690 239
- US-A- 5 664 920
- US-A- 5 741 100

## Description

The invention concerns a dowel designed to be inserted in a blind longitudinal hole in a first element to enable a second element to be anchored thereon. Document GB-A-175 127 describes a dowel comprising
a mandrel having a longitudinal axis and comprising a transverse proximal end and a transverse distal end designed to be turned respectively towards the outside and the inside of the hole, an outer peripheral surface of a normal cylindrical shape generated by revolution about the axis and extending longitudinally from one of said proximal and distal ends to the other, means for receiving a member for longitudinally pressing the second element against the first element, provided in a proximal end section of the mandrel, and a recess in said outer peripheral surface, provided in a distal end section of the mandrel and defined by a transverse shoulder turned in a longitudinal direction from the proximal end towards the distal end and by a bottom turned in the direction away from the axis and extending gradually away from the axis in said longitudinal direction from the shoulder,

- a wedge-shaped block engaged in the recess and defined by a base turned towards the axis and bearing with sliding movement on the bottom of the recess, by a transverse heel turned in the opposite direction to said longitudinal direction and bearing longitudinally against the shoulder of the recess in a defined initial position of the block relative to the mandrel, and by a back turned in the direction away from the axis and having a normal shape mating at least approximately with a cylindrical surface jacketing the outer peripheral surface of the mandrel in said defined initial position but having at least one tooth for anchoring in the first element, forming a transverse projection from the cylindrical jacketing surface in said defined initial position,
- means for temporarily retaining the block in said defined initial position, allowing sliding of the block in said longitudinal direction relative to the mandrel, from said defined initial position, so as to accentuate said transverse projection of the anchoring tooth, at least one in number, relative to said cylindrical jacketing surface by a cam effect resulting from the bearing of the base on the bottom of the recess with a sliding action.

Throughout this specification the 'cylindrical jacketing surface' of the outer peripheral surface of the mandrel is understood as being a longitudinal geometrical surface, which is cylindrical as generated by revolution about the axis, with which the outer peripheral surface of the mandrel merges where it is also cylindrical as generated by revolution about the axis, and which otherwise forms a continuation of that outer peripheral surface.

Whatever the embodiment it is installed by the following method:

A blind hole is formed in the first element, having a longitudinal dimension or depth greater than the longitudinal dimension between the distal end of the mandrel and its proximal end section, and a diameter slightly larger than that of the cylindrical surface jacketing the outer peripheral surface of the mandrel, namely of the same order as the largest transverse dimension of the assembly formed by the mandrel and the block, in its initial position defined relative to the mandrel, at the level of the anchoring tooth, at least one in number.

The assembly formed by the mandrel and the wedge-shaped block, temporarily held in its defined initial position, is then forced in longitudinally until it is sunk in the blind hole to a depth greater, by a predetermined value, than the required insertion depth when the dowel is fully installed. In the course of this movement the anchoring tooth, at least one in number, scrapes against the material of the first element around the blind hole, scratching the material and/or becoming slightly blunt, and the outer peripheral surface of the mandrel is also applied to the material of the first element diametrically opposite the anchoring tooth, at least one in number, relative to the longitudinal axis which is then approximately common to the mandrel and the blind hole.

At the end of this movement the anchoring tooth, at least one in number, remains applied to the material of the first element under sufficient transverse stress for the block to remain immobilised against extraction, by being anchored in the material of the first element, when longitudinal tension is then applied to the mandrel in the extracting direction relative to the hole, whereas the mandrel slides longitudinally through the blind hole towards its mouth. Extraction of the mandrel is stopped when it is engaged in the hole only over the above-mentioned predetermined longitudinal dimension in which its distal end section is still integrally engaged in the hole.

If the block remains immobilised longitudinally inside the blind hole during the partial extraction movement of the mandrel, a cam effect appears between the base of the block and the bottom of the recess in the mandrel and, as the mandrel is gradually partially extracted, results in the block being pushed further and further away from the axis of the mandrel and coming into firmer and firmer engagement with the material of the first element through the anchoring tooth, at least one in number. The outer peripheral surface of the mandrel continues to be applied to the material of the first element diametrically opposite the anchoring tooth, at least one in number, relative to the longitudinal axis which is still approximately common to the mandrel and the blind hole, but without undergoing a similar anchoring effect as it does not itself have an anchoring tooth, i.e. it is smooth. The longitudinal displacement for partially extracting the mandrel from the hole is limited to a value less than the longitudinal dimension of the bottom of the recess, in such a way that any tendency of the mandrel to come further out of the hole, by the effect of a load subsequently applied to it by the second element, would result in a continuation of the cam effect and consequently in strengthening of the anchoring of the dowel in the first element.

In currently known embodiments of such a dowel it has been found however that, if a longitudinal extracting load exceeding a predetermined threshold is applied to the mandrel, this results in plastic flow of the material of the block, and possibly plastic flow of the material of the mandrel, to such an extent that the block comes out of the recess in the mandrel and the mandrel is freed and suddenly comes out of the hole in the first element.

A non-ductile material such as a hardened steel may be chosen for the block and mandrel in order to avoid such an accident, but the choice of such a material complicates production of the dowel and puts a considerable strain on its cost price.

The purpose of the invention is to remedy these disadvantages of the state of the art. To this end the invention proposes a dowel as defined in the preamble, characterised in that the recess is spaced longitudinally from the distal end of the mandrel, and that the outer peripheral surface of the mandrel has a longitudinal flat surface between the recess and the distal end of the mandrel, the flat surface being set back from said cylindrical jacketing surface towards the axis and joining the bottom of the recess in said longitudinal direction.

The dowel according to the invention thus differs from prior art dowels, in which the bottom of the recess in the mandrel is joined, in the longitudinal direction from the proximal end to the distal end, either to a circular edge bounding a transverse distal end surface, as will be seen from the drawings of the above-mentioned British patent, or to the outer peripheral surface of the mandrel, which is cylindrical as generated by revolution about the axis of the mandrel, which means that the bottom, which is flat, is defined by an edge which is elliptical throughout except for the connection between the bottom and the heel.

It has been found quite unexpectedly that the presence of the flat surface characteristic of the invention, which may extend to the distal end of the mandrel in said longitudinal direction for reasons of simple production, enables the above-mentioned plastic flow to be avoided even if the mandrel and block are made of a ductile material such as soft steel, thus enabling the accidents experienced with state of the art dowels to be avoided, even without having to use expensive materials and processes to produce the mandrel.

The effect may be further improved if, in a preferred embodiment of the block, the block has longitudinal dimensions smaller than those of the recess and is defined in said longitudinal direction by a transverse face turned in that direction.

It is of course possible to give different shapes to the anchoring tooth, at least one in number. However, in terms of effective anchoring in the material of the first element both when the block is in its initial position defined relative to the mandrel and after installation, when it is longitudinally offset towards the distal end of the mandrel from the initial position, the anchoring tooth, at least one in number, is preferably in the form of a rib in an arc of revolution about the axis, reference being made to the predetermined initial position of the block relative to the mandrel.

In this respect the possibility of using a ductile material such as a soft steel to make the block proves to be particularly advantageous in that the anchoring tooth, at least one in number, may be made through plastic flow of the material forming the block. More specifically, when the back of the block has a plurality of examples of said rib, spread out longitudinally as is preferable for reasons of effective anchoring of the block in the material in which the blind hole is formed, these various examples may be made by plastic flow of the material forming the block from regions respectively close to it, so that the various examples of the rib are separated, on the back of the block, by transverse grooves resulting from plastic flow.

Various examples of the anchoring tooth, particularly the rib, may thus be spread out over the whole longitudinal dimension of the back of the block, but the anchoring tooth, at least one in number, preferably leaves clear at least one longitudinally limited section of the back of the block, that section being shaped as an arc of revolution about the axis, referring to the initial position of the block relative to the mandrel. An arrangement of this type is found to be particularly advantageous especially in respect of cooperation between the block and the means for keeping it temporarily in its initial position defined relative to the mandrel, in that it is possible for these means to comprise a transverse band which can be stretched possibly plastically but preferably elastically, for reasons of easy positioning of the band. The band surrounds said longitudinally limited section, at least one in number, and a longitudinally corresponding section of the outer peripheral surface of the mandrel. Thus it can effectively hold the block temporarily in its initial position defined relative to the mandrel without any danger of impeding the anchoring of the tooth, at least one in number, in the material forming the first element.

In particular the anchoring tooth, at least one in number, may thus leave clear at least one longitudinally end section of the back of the block, in an arc of revolution about the axis, adjacent the heel of the block, in which case the band preferably goes round that longitudinally end section and the longitudinally corresponding section of the outer peripheral surface of the mandrel, without any danger of interfering with the material of the first element inside the blind hole when the block is gradually coming out of the recess in the mandrel and leaving its initial position defined relative to the mandrel, in the course of the partial extraction of the mandrel from the blind hole during the installation of the dowel. The temporary holding of the block in its initial position relative to the mandrel is still more effective if, in a more preferable manner, the band goes over the heel of the block and the shoulder of the recess, also going round a section of the outer peripheral surface of the mandrel longitudinally adjacent the recess in said defined initial position.

However the anchoring tooth, at least one in number, may leave clear other sections of the back of the block. Thus it preferably also leaves clear at least one longitudinally end section of the back of the block, longitudinally opposite the heel thereof and shaped as an arc of revolution about the axis, referring to the defined initial position of the block relative to the mandrel. This firstly facilitates longitudinal insertion of the block in the blind hole in the first element during the installation of the dowel, and also makes the block less susceptible to plastic flow than at the level of the anchoring tooth, at least one in number, in the part of the block which tends to extend the furthest away from the axis of the mandrel when the above-mentioned cam effect is produced between the base of the block and the bottom of the recess in the mandrel.

Various conformations may also be given to the bottom of the recess and, in complementary manner, to the base of the block.

In particular they may both have a respective flat shape with a uniform slope relative to the axis of the mandrel, with reference to said defined initial position of the block as far as the base thereof is concerned, from the shoulder or the heel respectively.

In one embodiment however, the bottom of the recess and the base of the block have two respective sections, namely a first flat section. parallel with the axis and longitudinally adjacent the shoulder or the heel respectively, and a second flat section extending gradually away from the axis in the longitudinal direction from the proximal end to the distal end, with reference to the defined initial position of the block as far as the base thereof is concerned.

This arrangement in particular allows the block to be stabilised in its initial position defined relative to the mandrel, particularly if the first section of the base of the block coincides longitudinally with a longitudinally end section of the back of the block, in an arc of revolution about the axis, referring to the initial position of the block, and adjacent the heel thereof which the anchoring tooth, at least one in number, leaves clear and to which a retaining band is partially applied for temporarily holding the block in its initial position relative to the mandrel, in accordance with a preferred embodiment mentioned above.

In particular it may be of the male type, in which case the means for receiving a clamping member comprise screw thread on the outer peripheral surface of the mandrel in said proximal end section thereof, or of the female type, in which case the said receiving means comprise a longitudinal tapped hole provided coaxially in the proximal end of the mandrel.

In the case of a male dowel the mandrel is designed to remain projecting from the blind hole in the first element at its proximal end section, so that the depth to which the assembly formed by the mandrel and block is inserted in the blind hole in the first element before tension in the extracting direction is applied to the mandrel to strengthen the anchoring of the block in the first element is not critical, since it is sufficient to allow anchoring and since it leaves outside the hole a length of proximal end section of mandrel sufficient to allow the said tension to be applied and a clamping member such as a nut then to be screwed from that proximal end section. On the other hand, in the case of a female dowel it is generally important that the mandrel should not project from the blind hole in the first element when it has been partially extracted from anchoring the block in the hole, and that it should then preferably fit snugly against the mouth of the blind hole in the first element or be set back as little as possible from that mouth.

In another embodiment of the invention the dowel consequently comprises means designed temporarily to form a stop to limit the longitudinal insertion of the mandrel in said longitudinal direction, inside the blind hole in the first element, said stop being positioned to project transversely from the cylindrical surface jacketing the outer peripheral surface of the mandrel, which is turned in said longitudinal direction and has a predetermined longitudinal offset, less than the longitudinal dimension of the bottom of the recess, from the proximal end of the mandrel.

Once the dowel has been installed these stop means must not of course impede the positioning of the second element relative to the first or the screwing of the clamping member.

To this end, in a particularly simple and economic application, when the clamping member in known manner has a threaded longitudinal shank, screwed coaxially into the tapped hole in the proximal end of the mandrel, and a transverse head rigidly connected to the shank and with transverse dimensions greater than the diameter of said cylindrical jacketing surface, means may be provided for indexing a longitudinal offset corresponding to said predetermined longitudinal offset, between said head and the proximal end of the mandrel, in such a way that said head temporarily forms said stop, to limit the longitudinal insertion of the mandrel in the blind hole in the first element. Thus, since the head of the clamping member complies with this longitudinal offset from the proximal end of the mandrel, i.e. since the indexing is complied with, the fact that the mandrel is initially inserted in the blind hole in the first element until the head of the clamping member bears longitudinally on the first element around the blind hole ensures that the mandrel reaches a depth inside the hole such that, when it has been partially extracted to cause the block to be anchored in the material of the first element, the proximal end of the mandrel fits snugly against the first element around the blind hole or is set slightly back inside it and does not in any event project from the hole. The clamping member may then be screwed up or unscrewed as required.

When, as is preferable, it is desired to extract the mandrel partially from the blind hole in the first element under conditions which will cause the block to be anchored in a material from which the first element is formed, by screwing the clamping member into the tapped hole in the proximal end of the mandrel while the head of the clamping member bears on the first element around the blind hole therein, it is preferable to use indexing means suitable both to carry out their indexing function and not to obstruct such a method of partially extracting the mandrel from the blind hole in the first element.

Several embodiments of indexing means may be chosen for this purpose.

In one of these embodiments the indexing means have a mark on said threaded shank, coinciding with the proximal end of the mandrel when said shank has said defined longitudinal offset from the end. Just a ring of ink or paint, put on the threaded shank in the appropriate place, may be sufficient for the purpose. The installer then merely has to establish that the mark on the threaded shank coincides with the proximal end of the mandrel, then to take care not to turn the shank relative to the mandrel until the head of the clamping member rests on the first element around the hole, in order to ensure that the mandrel is then inserted in the hole to the appropriate depth. The mark does not obstruct the subsequent screwing of the clamping member into the hole in the proximal end of the mandrel, by means of its threaded shank, to extract the mandrel partially therefrom, nor does it prevent the subsequent unscrewing and screwing back of the clamping member relative to the mandrel.

In another embodiment of the indexing means these means have a crosspiece, which is engaged and held on said shank between said head and the proximal end of the mandrel and which has a longitudinal dimension corresponding to said defined longitudinal offset, said crosspiece being capable of retracting or being retracted, preferably without unscrewing the clamping member relative to the mandrel from a relative position in which the crosspiece bears against the proximal end of the mandrel in said longitudinal direction and against said head in the opposite direction to said longitudinal direction, and in which said head and the proximal end of the mandrel have said predetermined longitudinal offset between them. The fact that the crosspiece can retract or be retracted without unscrewing the clamping member from such a relative position, as is preferable, allows the indexing to be kept as long as it is useful.

The above-mentioned crosspiece may itself have several embodiments.

In one of these embodiments it coaxially surrounds said shank between said head and the proximal end of the mandrel, and it is longitudinally compressible, particularly between said head and the proximal end of the mandrel, by the effect of screwing the clamping member relative to the mandrel from said relative position. The crosspiece in the longitudinally non-compressed state thus allows indexing, but as it is longitudinally compressed when the clamping member is screwed relative to the mandrel, it does not obstruct the screwing or the resultant partial extraction of the mandrel from the blind hole in the first element.

The longitudinal compressibility of the crosspiece may be plastic or elastic but it is clear that, to the extent to which the residual longitudinal dimension of the crosspiece results in a corresponding offsetting of the proximal end of the mandrel towards the interior of the blind hole when the clamping member has been screwed on partial extraction of the mandrel from the blind hole, the embodiment of the crosspiece has to be chosen so that that residual dimension is as small as possible. Furthermore the longitudinal compression of the crosspiece must not be accompanied by any substantial expansion thereof.

For the above purposes the crosspiece may for example be a helical spring which is resiliently longitudinally compressible from a state of rest in which, in the absence of any longitudinal stress, it has a longitudinal dimension corresponding to said defined longitudinal offset. The helical spring is advantageously formed by a single turn of a fine metal wire between two transverse rings thereof, which can rotate relative to each other so that the turn is flattened between them, without expanding transversely as the spring is compressed as a result of the clamping member being screwed relative to the mandrel.

In another embodiment of the crosspiece it coaxially surrounds the shank between said head and the proximal end of the mandrel as in the above embodiment, but it is longitudinally rigid, is open or capable of being opened transversely over its whole longitudinal dimension, and it is transversely deformable in the expanding direction, so as to enable it to be detached from said shank by a relative transverse movement, preferably immediately before or during installation, that is to say, when the mandrel and block are already partially inserted in the blind hole in the first element but with the mandrel still projecting therefrom. Thus for example the crosspiece may be a clip which can be resiliently expanded transversely from a state in which it is fitted onto said shank. Care must of course be taken not to turn the clamping member relative to the mandrel once the crosspiece thus designed has been removed and until the head comes into abutment with the first element around the blind hole therein.

Other features and advantages of the invention will emerge from the description below, which relates to some examples of its application, and from the accompanying drawings which are an integral part of that description. In the drawings:
Fig. 1 is an elevation of a male dowel according to the invention before installation, while the block is in its initial position defined relative to the mandrel.
Fig. 2 is a partial perspective view of the dowel from the distal end of the mandrel, while the block is still in its initial position.
Fig. 3 is a side elevation, with a partial axial section, of a female dowel according to the invention with the block in its initial position relative to the mandrel.
Figs 4 and 5 are views similar to Fig. 3 but limited to the proximal end region of the mandrel and to the clamping member, showing embodiments of the indexing means different from that in Fig. 3.

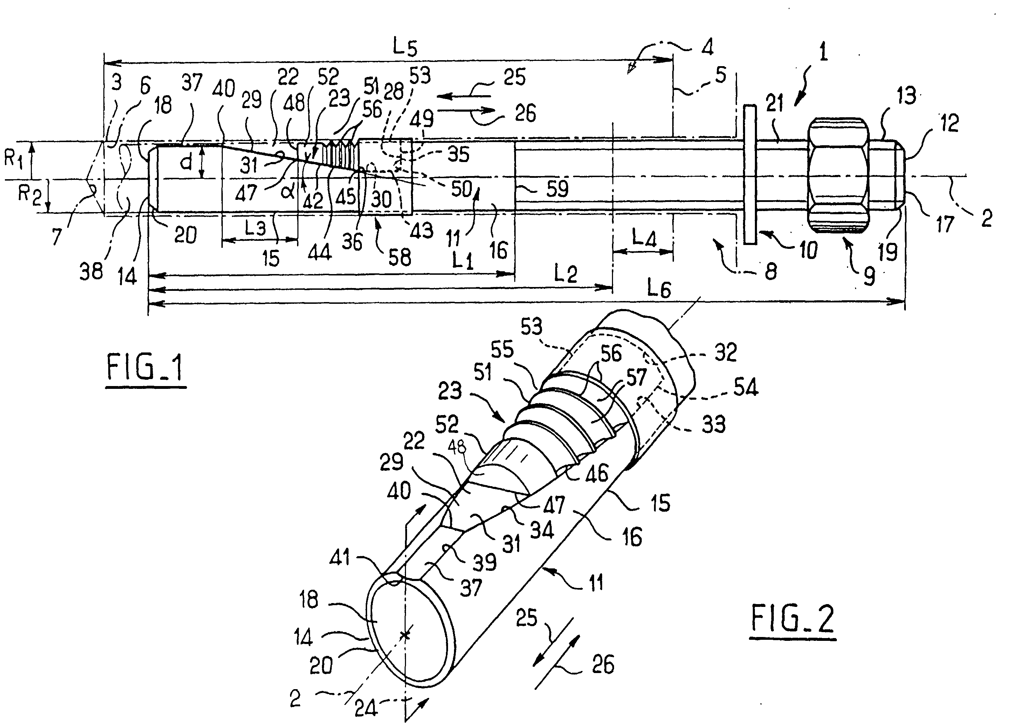

Referring firstly to Figs 1 and 2, here 1 denotes the dowel according to the invention, which has a longitudinal axis 2 and is designed to be inserted longitudinally in a blind hole 3 formed in an element 4 such as a wall or other masonry element, from a surface 5 thereof. For reasons of simplicity and with a suitable approximation for the purpose of this specification, the blind hole 3 will be taken as having the same longitudinal axis 2 as the dowel 1 according to the invention, and the common axis 2 will be taken as being perpendicular to the surface 5, at least in the areas thereof bounding the blind hole 3. Allowing for this approximation, the blind hole 3 is defined by a longitudinal internal peripheral surface 6, which is cylindrical as generated by revolution about the axis 2 with a defined radius R1, and by a transverse end 7 which may be of any shape, e.g. concave and frustoconical as generated by revolution about the axis 2, and which the internal peripheral surface 6 links with the surface 5 of the element 4.

The dowel according to the invention is in this case designed to enable an element 8 to be rigidly connected to the element 4 by pressing the element 8 longitudinally against the surface 5 of the element 4 around the blind hole 3 by means of a nut 9 which bears flat on the element 8 by means of a washer 10. The dowel comprises a longitudinal mandrel 11 forming a pin which, when the dowel 1 has been installed in the blind hole 3, has a proximal transverse end 12 outside the hole and a proximal end longitudinal section 13 with screw thread to interact with the nut 9, while inside the blind hole 3 it has a distal transverse end 14 and a distal end longitudinal section 15.

Longitudinally from one transverse end 12 to the other 14 the mandrel 11 is defined, in the direction away from the axis 2, by an outer peripheral surface 16, which in the usual way has a cylindrical shape generated by revolution about the axis 2 with a radius R2 smaller than the radius R1. The difference between the radii R1 and R2 may be of the order of a few tenths of a millimetre to approximately 1 mm, particularly according to the value of the radius R1, in a manner known to a person skilled in the art in the case of prior art anchoring dowels. At both the proximal end 12 and the distal end 14 the mandrel 11 is defined by a flat end face 17, 18, shaped as a disc with the axis 2, connected to the outer peripheral surface 16 by a respective bevel 19, 20 which is convex and frustoconical as generated by revolution about the axis 2.

Over a specific part of its longitudinal dimension or length from the proximal end 12, in the example illustrated over about half that longitudinal dimension, the outer peripheral surface 16 of the mandrel 11 contains thread 21 with the axis 2, for screwing the nut 9; this defines the proximal end section 13 of the mandrel 11. When the dowel 1 has been installed in the blind hole 3 in an element such as the element 4, part of that distal end section 13 generally remains engaged in the blind hole 13.

Over part of the remaining longitudinal dimension or length, defining the distal end section and in turn designed to remain integrally inside the blind hole 3 when the dowel has been installed, the outer peripheral surface 16 of the mandrel 11 has a recess 22 formed in it at one side only of the axis 2, the recess partially housing a block 13 designed to anchor the mandrel 11 rigidly inside the blind hole 3.

When the block 23 is engaged in the recess 22 under normal conditions of use of the dowel 1, the recess 22 and block 23 have a respective symmetry relative to a longitudinal plane 24 including the axis 2.

If the longitudinal directions are defined as follows: a longitudinal direction 25 from the proximal end 12 to the distal end 14, corresponding to the direction of coaxial insertion of the dowel 1 in the blind hole 3, and a longitudinal direction 26 opposite the direction 25, the recess 22 is bounded as follows:
- in the direction 26 it is bounded by a flat shoulder 28 perpendicular to the axis 2 and turned in the direction 25;
- towards the axis 2 and in the direction 25 it is bounded by a bottom 29 turned in the direction away from the axis 2, located entirely at one side of the axis and having two flat sections in this example, namely a first section 30 directly adjacent the shoulder 28 and joining it in the direction 26, said first section 30 being parallel with the axis 2 and as close as possible to it, particularly taking into account the mechanical strength requirements of the mandrel 11 which has its minimum cross-section at that level, and a second section 31 which, from the section 30 which it joins in the direction 26, extends gradually away from the axis 2 in the direction 25, forming an angle α of some 10° relative to the axis 2.

The sections 30 and 31 of the bottom 29 of the recess 22, like the shoulder 28, are perpendicular to the plane 24 and respectively symmetrical in relation to it. In the direction away from the plane 24, at each respective side of it, they are joined to the outer peripheral surface 16 by an edge 32 shaped as an arc of a circle centred on the axis 2 as far as the shoulder 28 is concerned, by a straight edge 33 parallel with the axis 2 as far as the section 30 is concerned and by a partly elliptical edge 34 as far as the section 31 is concerned. The respective connections of the section 30 with the shoulder 28 and with the section 31 in directions 26 and 25 respectively are in the form of a respective straight edge 35, 36 perpendicular to the plane 24.

The edges 34 converge in the direction 25, symmetrically with each other relative to the plane 24, but do not join, unlike similar edges in state of the art dowels. In a manner characteristic of the invention the outer peripheral surface 16 of the mandrel 11 has a flat surface 37 in an extension of section 31 of the bottom 29 of the recess 22 in direction 25, from the recess 22 to the bevel 20 of the distal end 14 of the mandrel 11. The flat surface 37 is perpendicular to the plane 24 and symmetrical with it. It is thus set back a few tenths of a millimetre towards the axis 2 from a geometrical surface 38, which is cylindrical as generated by revolution about the axis 2 with a radius equal to R2. The geometrical surface 38 forms the cylindrical jacket of the outer peripheral surface 16 of the mandrel 11. It will be noted that the recess 22 is also set back from the surface 38 towards the axis 2.

If the offset of the flat surface 37 from the surface 38 is defined as the difference between the radius R2 and the distance d between the flat surface 37 and the axis 2, good test results are obtained by taking a value of approximately 5 to 7 tenths of a millimetre for radius R2 values ranging from 6 to 8 mm, although other values could be taken without thereby going beyond the scope of the invention.

At each respective side of the plane 24 and symmetrically with it, the flat surface 37 joins the outer peripheral surface 16 of the mandrel 11 at two straight edges 39 parallel with the axis 2. In direction 26 it joins section 31 of the bottom 29 of the recess 22 along a straight edge 40 perpendicular to the plane 24 and connecting two points without references. These points are symmetrical relative to the axis 24 and each forms the connection between an edge 34 and an edge 39. In direction 25 the flat surface 37 is connected to the bevel 20 of the distal end by a hyperbolic edge 41 which joins the edges 39 opposite their connection to the edge 40.

The block 23 can slide particularly longitudinally inside the recess 22, but during insertion of the mandrel 11 in the blind hole 3 it occupies a specific initial position; this is its end position in direction 26 relative to the mandrel 11, in which it is shown in Figs 1 and 2 and will now be described.

In the direction of the axis 2, i.e. towards the bottom 29 of the recess 22, the block 23 is bounded by a base 42 which bears with sliding movement on the bottom 29.

Like the bottom 29 the base 42 has two flat sections 43, 44. The first section 43 is strictly complementary with section 35 of the bottom 29 of the recess 22, i.e. is rectangular and has the same dimensions as the section 35 on which it rests flat. The second section 44 is connected to the first section 43 along a straight edge 45 perpendicular to the plane 24, which also forms a plane of symmetry for the block 23, and turns gradually away from the axis 2 from the edge 45, subtending with the axis 2 an angle α equal to that subtended by section 31 of the bottom 29 of the recess 22, so that section 44 rests flat on section 31. In the direction away from the plane 24 and at each respective side of it section 44 of the heel 42 of the block 23 is defined by an edge 46, which has a median line indentation merging with a respective edge 34 over part of the longitudinal dimension of section 44 from the edge 45, for example over a longitudinal distance between half and three-quarters of that longitudinal dimension. Over the rest of the longitudinal dimension of section 44 each edge 46 is exactly superposed on the edge 34 located at the same side of the plane 24.

As illustrated, the block 23 preferably has longitudinal dimensions smaller than those of the recess 22, measured between the shoulder 28 and the edge 40, and in particular section 44 of its base 42 has a longitudinal dimension which is only a fraction of that of section 31 of the bottom 29 of the recess 22, measured between the edges 36 and 40. In the example illustrated that fraction is approximately half, although other values could be chosen without thereby going beyond the scope of the invention; similarly values different from those indicated above could be chosen for the respective proportions of the toothed and untoothed parts of each edge 46.

In direction 25 section 44 of the base 42, i.e. the base 42 itself, is thus bounded by a straight edge 47 set back in direction 26 from the edge 40 bounding the bottom 29 in direction 25, and that edge 47 is defined by the connection between the base 42 and a flat face 48 perpendicular to the axis 2, turned in direction 25 and bounding the block 23 in that direction. In the opposite direction, i.e. direction 26, the block 23 is bounded by a heel 49 which is also flat and perpendicular to the axis 2 but turned in direction 26, the heel 49 being directly complementary with the shoulder 28 of the recess 22 and bearing flat thereon. In the direction towards the axis 2 the heel 49 joins section 43 of the base 42 of the block at a straight edge 50 perpendicular to the plane 24 and meeting the edge 35.

In the direction away from the axis 2 the face 48 and the heel join a back 51 of the block 23 and more specifically join a respective section 52, 53 thereof, which is in the form of part of a cylinder generated by revolution about the axis 2 with a radius equal to the radius R2 of the outer peripheral surface 16 of the mandrel 11, so as to mate locally with the jacketing surface 38. Section 52 of the back 51 thus joins the parts of the edges 46 which mate with the edges 34 of section 31 of the bottom 29 of the recess 22, while section 53 joins two straight edges 54 which are parallel with the axis 2 and symmetrical relative to the plane 24 and which bound section 43 of the base 42 in the direction away from the plane 2.

Longitudinally between sections 52 and 53 the back 51 has a section provided with a plurality of teeth projecting from the jacketing surface 38, e.g. to a distance from the axis 2 substantially equal to the radius R1 of the inner peripheral surface 6 of the blind hole 3, so that it can be anchored in the material forming the element 4 at that surface 6.

In the example illustrated these teeth are in the form of ribs 56 in an arc of revolution about the axis 2 and end, in the direction away from the axis, at a respective unnumbered edge in an arc of a circle with a radius equal to R1. The ribs 56 are spread out longitudinally and alternate with transverse grooves 57 resulting from provision of the ribs 56 by plastic flow of the material forming the block 23, from an initial conformation (not shown) of the back 51 thereof in which the back 51 is uniformly shaped as part of a cylinder of revolution about the axis 2 with a radius equal to R2.

Experience has shown that the presence of the flat surface 37 in an extension of the bottom of the recess 22 in direction 25, in a manner characteristic of the invention, enables the block 23 like the mandrel 25 to be made of a ductile material such as soft steel.

Whereas the ribs 56 project from the jacketing surface 38 the grooves 57 are naturally recessed relative to it, and the connection between the ribs 56 and grooves 57 and section 44 of the base 42 at each respective side of the plane 24 forms the above-mentioned indentation of each edge 46 of that section 44.

In the example illustrated the ribs 56 are four in number, as are the grooves 57, although different numbers could of course be chosen without thereby going beyond the scope of the invention.

Similarly the conformation of the ribs 56 and grooves 57 may be different from the conformation illustrated, which will now be described, and other ways of providing at least one anchoring tooth on the back 51 of the block 23 could be chosen without going beyond the scope of the invention.

In the example illustrated each of the grooves 57, when viewed in section through a plane including the axis 2, has a V section, and a first groove 57, a first rib 56, a second groove 57, a second rib 56, a third groove 57, a third rib 56, a fourth groove 57 and a fourth rib 56 succeed each other in that order in direction 26, from section 52 to section 53 of the back 51 of the block 23. Consequently the first three ribs 56 have a V section when viewed in section through a plane including the axis 2, i.e. they have sides inclined in both directions 25 and 26, whereas the fourth rib 56 has a side inclined only in direction 25, i.e. towards the fourth groove 57, and forms a flat, unnumbered shoulder perpendicular to the axis 2 where it joins section 53.

It will readily be appreciated that, owing to the inclination of sections 44 and 31 of the base 42 of the block 23 and of the bottom 29 of the recess 22 relative to the axis 2, sliding of the block 23 in direction 25 relative to the mandrel I 1 from the initial position illustrated is accompanied by an accentuation of the projection formed by the ribs 56 from the cylindrical jacketing surface 38, and by the formation of increasing projection of sections 52 and 53 of the back 51 from the jacketing surface 38. This results in firm anchoring of the ribs 56 in the inner peripheral surface 6 of the blind hole 3 and immobilisation of the mandrel 11 therein, since the sliding takes place when the mandrel 11 has been engaged inside the blind hole 3, at least over all its distal end section 15, under conditions which will emerge from the following description.

Section 52 of the back 51 of the block 23 advantageously remains disengaged when the block 23 is in its initial position relative to the mandrel 11, so as to facilitate first the insertion of the mandrel 11 in the blind hole 3 while the block is in its initial position, then the movement of the ribs 56 into locking engagement with the inner peripheral surface 6 of the blind hole 3.

Section 53 on the other hand is advantageously used to ensure that the block 23 is provisionally held in its initial position relative to the mandrel 11, without preventing it from sliding thus in direction 25 relative to the mandrel 11 from its specific initial position, at least since the sliding results from an action applied to the block 23 and mandrel 11 for that purpose.

In the example illustrated a transverse band 58 is provided to carry out such provisional retention. It can be extended, preferably elastically, and may e.g. be made of natural or synthetic rubber.

When the block 23 is in its specific initial position relative to the mandrel 11, the band 58 surrounds and elastically grips section 53 of the back 51 of the block 23 and a corresponding unnumbered longitudinal section of the outer peripheral surface 16 of the mandrel 11.

It is preferable, as illustrated, for the band 58 to go over the heel 49 and the shoulder 28, then bearing longitudinally on each other, and also to go round an unnumbered annular section of the outer peripheral surface 16 of the mandrel longitudinally adjacent the recess but set back therefrom in direction 26.

The band 58 chosen is thin enough, in radial directions from the axis 2, to have an outside radius no longer than R1 when its inside radius is the radius R2 common to the outer peripheral surface 16 of the mandrel 11 and to section 53 of the back 51 of the block 23, so that it does not form a projection from the anchoring teeth formed by the ribs 56 and does not risk interfering in their position with the inner peripheral surface 6 of the blind hole 3, and so that it can usefully form a bearing aid for the outer peripheral surface 16 of the mandrel 11 against the surface 6 at the side of the axis 2 opposite the ribs 56.

The dowel according to the invention, which has just been described, is installed by the same method as the previously known dowels of the same type discussed above.

This method will be briefly recalled.

The L dimensions refer to the following:
- L1 is the longitudinal dimension or length of the distal end section of the mandrel 11, measured between its front surface 14 and the transition 59 between the non-threaded part of the outer peripheral surface 16 and the threaded part thereof, said transition being set back in direction 26 from the shoulder 28 of the recess 22.
- L2 is the longitudinal dimension or depth to which the mandrel 11 has to be engaged inside the hole 3 after installation, for the dowel 1 to have a specific resistance to extraction from the hole 3 allowing for the nature of the material of the element 4, the distance L2 being determined by the manufacturer of the dowel 1 and generally being at least equal to the distance L1.
- L3 is the difference between the respective longitudinal dimensions (not carrying references) of the block 23 and the recess 22, namely the longitudinal distance between the face 48 of the block 23 and the edge 40 joining section 31 of the bottom 29 of the recess 22 to the flat surface 37 when the block 23 is in its specified initial position shown in the drawings; the value L3 is of course far smaller than the length L1.
- L4 is the displacement partially extracting the mandrel 11 from the blind hole 3 after insertion therein. The value L4 is no greater than and is preferably less than the difference L3, and is determined by the manufacturer of the dowel 1 so that it will cause the block 23 to be applied to the inner peripheral surface 6 of the blind hole 3 by the cam effect previously described, under conditions such that the dowel 1 obtains a specific resistance to being pulled out of the hole 3 for a specific type of material forming the element 4.

These values being defined, a first phase in the installation of the dowel 1 consists of drilling a blind hole 3 in the surface 5 of the element 4, giving the inner peripheral surface 6 of the hole a longitudinal dimension L5 at least equal to the sum of L2 and L4, then inserting the mandrel 11 coaxially in the blind hole 3 thus formed. The mandrel 11 carries the block 23, which is held in its specified initial position in the recess 22 by the band 58. Insertion is effected by force, the ribs 56 of the back 51 of the block 23 coming into at least frictional engagement with the inner peripheral surface 6 of the blind hole 3, against which the outer peripheral surface 16 of the mandrel 11 bears particularly by means of the band 58 at the side of the axis 2 opposite the ribs 56.

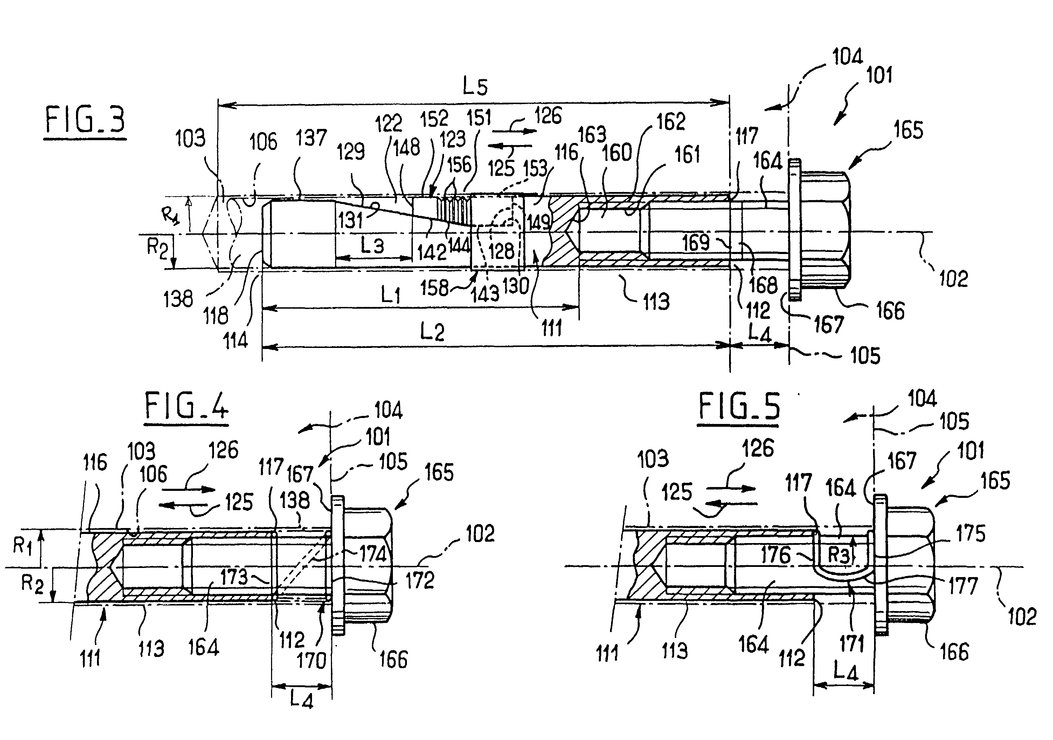

Insertion is continued until the front surface 14 of the mandrel 11 reaches a depth inside the hole 3 of a value at least equal to the sum of L2 and L4, measured from the surface 5, after which the insertion movement is stopped. In a manner which is not illustrated but will easily be understood by a person skilled in the art on reading the subsequent description of another dowel according to the invention shown in Fig. 3, a mark made on the outer peripheral surface 16 of the mandrel 11, for example in the form of a transverse coloured ring drawn in ink or paint at a longitudinal distance equal to the sum of L2 and L4 from the end face 18, makes it possible to indicate that an insertion depth equal to that sum has been reached by the fact that the mark coincides with the surface 5 of the element 4. When insertion is completed the block 23 is still in its specified initial position inside the recess 22, as the fact that its heel 49 bears on the shoulder 28 of the recess 22 in direction 26 obliges it to remain in that position while accompanying the mandrel 11 in its insertion.

Partial coaxial extraction of the mandrel 11 from the hole 3, over the distance L4, is next effected e.g. by screwing the nut 9 until the washer 10 is applied to the surface 5 around the blind hole 3 then by continuing the screwing process, while the mandrel 11 is retained to prevent it from rotating about the axis 2, inside the hole 3, by the engagement of the ribs 56 on the back 51 of the block in the inner peripheral surface 6 of the hole. As the ribs 56 on the back of the block 23 remain in engagement with the inner peripheral surface 6 of the hole 3 and the band 58 does not prevent the mandrel 11 from moving in direction 26 relative to the block 23, the block remains immobilised in the longitudinal direction inside the hole 3 during the partial extraction, and the cam effect which is set up between section 44 of its base and section 31 of the bottom 29 of the recess 22 causes it to move gradually away from the axis 2 as the partial extraction progresses, thus strengthening the anchoring of the ribs 56 in the inner peripheral surface 6 of the hole 3. When the mandrel has been displaced by no more than L4 in the extracting direction, the amount of displacement being appropriately defined for that purpose by the manufacturer according to the material of the element 4, i.e. when the depth of engagement of the mandrel 11 inside the blind hole 3 remains at least equal to L2, the dowel 1 has the required resistance to being pulled out of the hole 3 by the effect of tenion along the axis 2. The installer then notes a marked increase in the resistance of the nut 19 to screwing, indicating a marked increase in the resistance of the mandrel 11 to extraction from the blind hole 2, and stops screwing. The mandrel 11 is then stabilised inside the hole 3 and the nut 9 can be unscrewed and the washer 10 removed to engage the element 8 on the mandrel 11, then forming a pin, before the washer 10 is replaced and the nut 9 screwed back.

In an alternative version the element 8 may be present throughout the installation of the dowel 1, in which case the nut 9 and washer 10 bear on the surface 5 of the element 4 via the element 8, which is gripped between them.

This method of installing the dowel 1 naturally presupposes that it has a longitudinal dimension L6 greater than the sum of L2 and L4 between its end faces 17 and 18. The longitudinal dimension of the bevel 19 is ignored here as it was previously, like that of the bevel 20, particularly in the comparison between L1, L2 and L5. The difference between L6 and the sum of L2 and L4 is chiefly determined by the longitudinal dimension of the element 8 to be fixed on an element 4 and by the longitudinal dimension of the thread required to position the washer 10 and screw on the nut 9.

Unlike the male dowel 1 just described, the female dowel which will now be described with reference to Figs 3 to 5 has a mandrel which as a general rule is entirely housed inside the blind hole formed to receive it, even after installation.

However the female dowel 101 has great similarities with the dowel 1 just described, and the components and part-components described with reference to Figs 1 and 2 will be found again in Figs 3 to 5, with the same reference numbers plus 100, except for the screw thread 21 and bevel 19 of the mandrel 11 and the nut 9 and washer 10.

In the absence of the screw thread 21 and bevel 19 on the mandrel 111 of the dowel 101, the outer peripheral surface 116 is still cylindrical as generated by revolution about the axis 102 with the radius R2 from the recess 122, in direction 126, to the proximal end 112 of the mandrel 111, i.e. particularly over the entire proximal section 113 of the mandrel 111, and directly joins the end face 117 at the proximal end 112. The longitudinal dimension or length L2 over which the mandrel 111 has to remain inserted coaxially inside the blind hole 103 when it has been partially extracted therefrom to effect anchoring is then measured between the end faces 117 and 118. in such a way that when the mandrel 101 is fully installed the end face 117 fits snugly against the surface 105 of the element 104 or is slightly set back therefrom. This presupposes that the end face 117 is set back coaxially from the surface 105 towards the interior of the blind hole 103 by the distance L4 when the mandrel 111 has been inserted by force in the hole 103 and before it is partially extracted therefrom as shown in Fig. 3. The relationships between L1, L2, L3, L4 and L5 are as before but in this case L6 is the same as L2 and consequently does not appear in Fig. 3.

The mandrel 111 is further distinguished from the mandrel 11 by the fact that, instead of being solid like the end face 17, its end face 117 is hollowed out centrally, i.e. along the axis 102, with a coaxial blind hole 160 which extends longitudinally over the entire longitudinal dimension (not carrying a reference) of the proximal end section 113, i.e. to the distance L1 from the end face 118 of the mandrel 111.

More specifically, from its mouth in the face 117 to the distance L1 from the face 118 in direction 125, the blind hole 160 is bounded by an inner peripheral surface 161 which is cylindrical as generated by revolution about the axis 102 and contains internal screw thread 162 centred on axis 102, and that surface 161 is connected in direction 125 to a concave end face 163 which may e.g. be frustoconical as generated by revolution about the axis 102.

Thus the threaded longitudinal shank 164 of a bolt 165 may be screwed coaxially into the proximal end section 113 of the mandrel 111 from the end face 117 thereof. The bolt 165 further comprises, integrally with the threaded shank 164, a transverse head 166 comparable in all ways with the assembly formed by the nut 9 and washer 10 and, like the nut and washer, forming a transverse projection from the cylindrical surface 138 jacketing the outer peripheral surface 116 of the mandrel 111, so that an unnumbered element corresponding to the element 8 can be rigidly connected to the element 104 by pressing it longitudinally onto the surface 105 thereof; that element being held on the threaded shank 164 between the surface 105 and the head 166.

In a particularly advantageous manner the bolt 165 is also used to form a stop limiting the depth of coaxial insertion of the mandrel 111, carrying the block 123 in its initial position defined relative to the mandrel, in the blind hole 103 before the partial extraction of the mandrel 111 therefrom, so that after the partial extraction the end face 117 substantially fits snugly against the surface 105 or is slightly set back from that surface towards the interior of the hole 103.

For this purpose, before the insertion process, the bolt 165 and mandrel 111 are placed, by relative rotation about the axis 102, in a position such that a flat transverse surface 167, which the head 166 of the bolt 165 has in direction 125 and which has a radius (not carrying a reference) greater than the radius R1 of the inner peripheral surface 106 of the blind hole 103, relative to the axis 102, is a predetermined distance L4 away from the end face 117 of the mandrel 111, and any rotation of the bolt 165 about the axis 102 relative to the mandrel 111 is prevented throughout the whole ensuing process of inserting the mandrel 111 and block 123 by force into the blind hole 103.

Thus if insertion is continued until the surface 167 of the bolt 165 bears on the surface 105 of the element 104 around the blind hole 103, the end face 117 is sure to be set back from the surface 105 by a distance L4 in direction 125, towards the interior of the hole 103.

Partial extraction of the mandrel 111 from the hole 103 is next effected, under conditions which will lead to anchoring of the block 123 in the inner peripheral surface 106 of the blind hole 103, by screwing the bolt 165 into the mandrel 111, the mandrel being held to prevent it from rotating in the hole 103 by incipient anchoring of the block 123 in the inner peripheral surface 106 thereof. The fact that the surface 167 bears persistently on the surface 105 causes the desired longitudinal displacement of the mandrel 111 in direction 126 inside the blind hole 103, and when the end face 117 of the mandrel 111 comes into abutment with the surface 167 of the head 166 of the bolt 165, i.e. with a snug coplanar fit with the surface 105 of the element 104, the displacement L4 necessary for effective anchoring of the block 123 in the inner peripheral surface 106 of the blind hole 103 has definitely been made, corresponding to the termination of partial extraction of the mandrel 111 from the hole 103. This termination is observed through the difficulty experienced in continuing to turn the bolt 165 in the screwing direction relative to the mandrel 111. The same observation may be made before the end face 117 has reached the surface 167, i.e. when the mandrel 111 has only covered a distance less than L4 in the direction of its extraction from the hole 103, showing that effective anchoring of the block 123 in the inner peripheral surface 106 of the blind hole 103 did not necessitate covering the whole distance L4. There again the screwing of the bolt 165 is stopped but the end face 117 remains slightly set back inside the blind hole 103 from the surface 105 of the element 104.

The bolt 165 can then be unscrewed, then screwed back when the element corresponding to the element 108 has been interposed between the end face 105 of the element 104 and the head 166.

In a preferred embodiment of the female dowel 101 according to the invention, indexing means are provided to enable the installer to make sure that, before the mandrel 111 carrying the block 123 in its initial position defined relative to it is inserted in the hole 103, the surface 167 of the head 166 of the bolt 165 is a distance equal to L4 away from the end face 117 of the mandrel 111.

The indexing means may take various forms, one example of which is shown in Fig. 3 and two other examples in Figs 4 and 5 respectively.

In the Fig. 3 example the indexing means comprise a mark 168 on the threaded shank 164, provided that the mark 168 does not affect the ability of the screw thread to engage the tapping 162 in the blind hole 160.

In this example the mark 168 is applied to the threaded shank 164 in the form of a coloured transverse ring, drawn in ink or paint and ending in direction 125 at an edge 169 arranged in a transverse plane (not carrying a reference), which is offset from the surface 167 in direction 125 by a distance equal to L4.

Thus the only step necessary to ensure that the surface 167 is at a longitudinal spacing equal to L4 from the end face 117 of the mandrel 111 is to make the edge 169 coincide with the end face 117 of the mandrel 111.

In the examples in Figs 4 and 5, where the same dowel can be found with only the distal end 112 and the distal end section 113 shown, the indexing means are formed by a respective crosspiece 170, 171 engaged and held coaxially on the shank 164 of the bolt 165 between the surface 167 of the head 166 thereof and the end face 117 of the mandrel 111. In a longitudinal direction the crosspiece 170, 171 has a dimension equal to L4, so as to maintain a longitudinal spacing corresponding to that value between the surface 167 of the head 166 of the bolt 165 and the face 117 of the mandrel 111, by bearing on the respective surfaces in direction 126 and direction 125 in a state prior to installation as illustrated in Figs 4 and 5.

In the Fig. 4 example the crosspiece 170 is in the form of a helical spring, which coaxially surrounds the shank 164 between the surface 167 of the head 166 of the bolt 165 and the end face 117 of the mandrel 111, and can be compressed longitudinally between the surfaces 167 and 117, particularly by screwing the bolt 165 into the mandrel 111, from a state of rest in which the crosspiece has a longitudinal dimension equal to L4, in the absence of any longitudinal stress, and in which it is shown in Fig. 4.

The spring 170 has transverse dimensions such that, in the direction away from the axis 102, it has a maximum radius no greater than the radius R2 of the outer peripheral surface 116 of the mandrel 111, i.e. so as not to form a projection from the cylindrical surface 138 jacketing the surface 116 when in the above-mentioned state of rest, so that the spring can go into the blind hole 103 without coming into contact with the inner peripheral surface 106 thereof during the initial insertion of the mandrel 111 into the hole 103, with the block 123 in its initial position defined relative to the mandrel 111, until the surface 167 of the head 166 of the bolt 165 bears on the surface 105 of the element 104 around the hole 103, as illustrated in Fig. 4.

The spring 170 is further designed so that, in a state of maximum longitudinal compression in which it can be put by screwing the bolt 165 into the mandrel 11, it has the smallest possible longitudinal dimension while having transverse dimensions compatible with its housing inside the blind hole 103, i.e. an outside radius no greater than R1.

For this purpose the spring 170 preferably has a single helical turn 174, extending e.g. through 180° about the axis 102 in the state of rest shown in Fig. 4, between two transverse turns 172, 173 which are annular of revolution about the axis 102 and which are applied flat respectively to the surface 167 of the head 166 of the bolt 165 in direction 126 and to the end face 117 of the mandrel 111 in direction 125, particularly in the state of rest of the spring 170 shown in Fig. 4.

Under these conditions, before the mandrel 111 carrying the block 123 in its initial position relative thereto is inserted coaxially in the hole 103, it is easy for the installer, by screwing or unscrewing, to put the bolt 165 and mandrel 111 in a position such that the turns 172, 173 thus rest flat respectively against the surface 167 and the face 117 without longitudinal compression of the spring 170; this corresponds to a longitudinal spacing of the surfaces 167 and 117 equal to L4. The installer next engages the mandrel 111 carrying the block 123 coaxially in the blind hole 103 until the surface 167 of the head 166 of the bolt 165 rests against the surface 105 of the element 104 around the blind hole 103. He then screws the plug 165 into the mandrel 111, which is held to prevent it from rotating in the blind hole 103 by the incipient anchoring of the ribs 156 (not visible in the figure) in the inner peripheral surface 106 thereof, thereby longitudinally compressing the spring between the surfaces 117 and 167. When the spring 170 is thus compressed to the maximum the end face 117 of the mandrel 111 is set back only slightly towards the interior of the blind hole 103 from the surface 105 of the element 104, and the displacement partially extracting the mandrel 111 from the hole 103 is near enough to L4 for the block 123 to be anchored effectively in the inner peripheral surface 106 of the blind hole 103.

The bolt 165 can then be unscrewed completely to extract the spring 170, then screwed back into the mandrel 111 to fix the element corresponding to the element 8 to the element 104 by pressing it longitudinally against the surface 105 thereof by means of the head 166 of the bolt 165.

In the Fig. 5 example on the other hand the crosspiece 171 is longitudinally rigid, i.e. it permanently has a longitudinal dimension equal to L4.

Like the crosspiece 174 it coaxially surrounds the threaded shank 164 of the bolt 165 between the surface 167 of the head 166 thereof and the end face 117 of the mandrel 111, bearing against both these surfaces respectively in direction 126 and direction 125 to maintain a longitudinal spacing equal to L4 between them. It then has a maximum outside radius equal to no more than the radius R2 of the outer peripheral surface 116 of the mandrel 111. Unlike the crosspiece 170 however it is open or capable of being opened transversely over the whole of its longitudinal dimension, and forms a clip which can be elastically or plastically deformed transversely in an expanding direction, from a state in which it is held on the shank 164 by being transversely fitted thereon, to enable it to be detached from the shank by a relative transverse movement.

More specifically, in the embodiment illustrated the crosspiece or clip 171 is a wire shaped so as to have two transverse wings 175, 176 in an arc of a circle centred on the axis 102, with an angular development greater than 180° but preferably less than 360° when the crosspiece or clip 171 is fitted on this latter part, and with a longitudinal web 177 interconnecting the two wings 175, 176 so as to define with them a U shape with an overall longitudinal dimension equal to L4. In the state shown in Fig. 5 the wings 175 and 176 are applied flat respectively to the surface 167 of the head 166 of the bolt 165 in direction 126 and to the end face 117 of the mandrel 111 in direction 125.

When it is thus fitted onto the shank 164 of the bolt 165 with its wings 175 and 176 bearing longitudinally on the surfaces 167 and 117, the crosspiece or clip 171 enables the installer to make sure that the surfaces 167 and 117 are spaced at a distance equal to L4.

Immediately before installing the dowel the installer removes the crosspiece or clip 171, opening it with a movement across the shank 164. He next installs the dowel as described in connection with the Fig. 3 example, particularly avoiding turning the bolt 165 relative to the mandrel 111 during the forced insertion of the mandrel in the blind hole 103, with the block 123 in the defined initial position, until the surface 167 of the head 166 of the bolt 165 rests against the surface 105 of the element 104 around the blind hole 103 as shown in Fig. 5, naturally without the crosspiece or clip 171 being present as it is in Fig. 5.

It will be observed that in the two embodiments shown in Figs 4 and 5 the crosspieces 170, 171, namely the spring and clip respectively, are respectively capable of retracting or being retracted without previously unscrewing the bolt 165 relative to the mandrel 111. This makes it possible to keep a space equal to L4 between the surface 167 of the head 166 of the bolt 165 and the end face 117 of the mandrel 111 during the insertion of the mandrel 111 and the block 123, in its initial position defined relative thereto, in the blind hole 103.

Other embodiments of the means for indexing the longitudinal spacing between the surface 167 of the head 166 of the bolt 165 and the end face 117 of the mandrel 111 could naturally be chosen without thereby going beyond the scope of the invention. Similarly means other than the head 166 of the bolt 165 could be provided to form the stop limiting the forced insertion of the mandrel 111, carrying the block 123 in its initial position relative thereto, in the blind hole 103 before the partial extraction of the mandrel 111 from the hole.

## Claims

1. A dowel (1, 101) designed to be inserted in a blind longitudinal hole (3, 103) in a first element (4, 104) to enable a second element (8) to be anchored thereon, and comprising
- a mandrel (11, 111) having a longitudinal axis (2, 102) and comprising a transverse proximal end (12, 112) and a transverse distal end (14, 114) designed to be turned respectively towards the outside and the inside of the hole (3, 103), an outer peripheral surface (16, 116) of a normal cylindrical shape generated by revolution about the axis (2, 102) and extending longitudinally from one of said proximal and distal ends (12, 14, 112, 114) to the other, means (21, 160) for receiving a member (9, 165) for longitudinally pressing the second element (8) against the first element (4, 104), provided in a proximal end section (13, 113) of the mandrel (11, 111), and a recess (22, 122) in said outer peripheral surface (16, 116), provided in a distal end section (15, 115) of the mandrel (11, 111) and defined by a transverse shoulder (28, 128) turned in a longitudinal direction (25, 125) from the proximal end (12, 112) towards the distal end (14, 114) and by a bottom (29, 129) turned in the direction away from the axis (2, 102) and extending gradually away from the axis (2, 102) in said longitudinal direction (25, 125) from the shoulder (28, 128),
- a wedge-shaped block (23, 123) engaged in the recess (22, 122) and defined by a base (42, 142) turned towards the axis (2, 102) and bearing with sliding movement on the bottom (29, 129) of the recess (22, 122), by a transverse heel (49, 149) turned in the opposite direction (26, 126) to said longitudinal direction (25, 125) and bearing longitudinally against the shoulder (28, 128) of the recess (22, 122) in a defined initial position of the block (23, 123) relative to the mandrel (11, 111), and by a back (51, 151) turned in the direction away from the axis (2, 102) and having a normal shape mating at least approximately with a cylindrical surface (38, 138) jacketing the outer peripheral surface (16, 116) of the mandrel (11, 111) in said defined initial position but having at least one tooth (56, 156) for anchoring in the first element (4, 104), forming a transverse projection from the cylindrical jacketing surface (38, 138) in said defined initial position,
- means (58, 158) for temporarily retaining the block (23, 123) in said defined initial position, allowing sliding of the block (23, 123) in said longitudinal direction (25, 125) relative to the mandrel (11, 111), from said defined initial position, so as to accentuate said transverse projection of the anchoring tooth (56, 156), at least one in number, relative to said cylindrical jacketing surface (38, 138) by a cam effect resulting from the bearing of the base (42, 142) of the block (23, 123) on the bottom (29, 129) of the recess (22, 122) with a sliding action,
**characterised in that** the recess (22, 122) is spaced longitudinally from the distal end (14, 114) of the mandrel ( 11, 111), and that the outer peripheral surface (16, 116) of the mandrel has a longitudinal flat surface (37, 137) between the recess (22, 122) and the distal end (14, 114) of the mandrel (11, 111), the flat surface (37, 137) being set back from said cylindrical jacketing surface (38, 138) towards the axis (2, 102) and joining the bottom (29, 129) of the recess (22, 122) in said longitudinal direction (25, 125).

2. A dowel according to claim 1, **characterised in that** the flat surface (37, 137) extends in said longitudinal direction (25, 125) to the distal end (14, 114) of the mandrel (11, 111).

3. A dowel according to claim 1 or 2, **characterised in that** the block (23, 123) has longitudinal dimensions smaller than those of the recess (22, 122) and is defined in said longitudinal direction (25, 125) by a transverse face (48, 148) turned **in that** direction (25, 125).

4. A dowel according to any of claims 1 to 3, **characterised in that** the mandrel (11, 111) is made of soft steel.

5. A dowel according to any of claims 1 to 4, **characterised in that** the block (23, 123) is made of soft steel.

6. A dowel according to any of claims 1 to 5, **characterised in that** the at least one anchoring tooth (56, 156) is in the form of a rib (56, 156) in an arc of revolution about the axis (2, 102).

7. A dowel according to claim 6, **characterised in that** the back (51, 151) of the block (223, 123) has a plurality of said ribs (56, 156), spread out longitudinally and separated by transverse grooves (57) resulting from provision of the ribs (56, 156) by plastic flow of the material of the block (23, 123).

8. A dowel according to any of claims 1 to 7, **characterised in that** the at least one anchoring tooth (56, 156) leaves clear at least one longitudinally limited section (52, 53, 152, 153), in an arc of revolution about the axis (2, 102), of the back (51, 151) of the block (23, 123).

9. A dowel according to claim 8, **characterised in that** the means (58, 158) for temporarily holding the block (23, 123) in said defined initial position comprise a transverse band (58, 158) which is extensible, particularly elastically, and which surrounds said at least one longitudinally limited section (52, 53, 152, 153), and a longitudinally corresponding section of the outer peripheral surface (16, 116) of the mandrel (11, 111).

10. A dowel according to claim 8 or 9, **characterised in that** the at least one anchoring tooth (56, 156) leaves clear at least one longitudinally end section (53, 153) of the back (51, 151) of the block (23, 123), in an arc of revolution about the axis (2, 102), adjacent the heel (49, 149) of the block (23, 123).

11. A dowel according to claim 10, **characterised in that** the at least one anchoring tooth (56, 156) also leaves clear at least one longitudinally opposed longitudinally end section (52, 152) of the back (51, 151) of the block (23, 123), in an arc of revolution about the axis (2, 102).

12. A dowel according to claim 9, in combination with claim 10 or 11, **characterised in that** the band (53, 153) surrounds said longitudinally end section (53, 153), adjacent the heel (49, 149) of the block (23, 123), and the longitudinally corresponding section of the outer peripheral surface (16, 116) of the mandrel (11, 111).

13. A dowel according to claim 12, **characterised in that** the band (58, 158) goes over the heel (49, 149) of the block (23, 123) and the shoulder (28, 128) of the recess (22, 122), also going round a section of the outer peripheral surface (16, 116) of the mandrel (11, 111) longitudinally adjacent the recess (22, 122), in said defined initial position.

14. A dowel according to any of claims 1 to 13, **characterised in that** the bottom (29, 129) of the recess (22, 122) and the base (42, 142) of the block (23, 123) have two respective sections, namely a first flat section (30, 43, 130, 143), parallel with the axis (2, 102) and longitudinally adjacent the shoulder (28, 128) or the heel (49, 149) respectively, and a second flat section (31, 44, 131, 144) extending gradually away from the axis (2, 102) in said longitudinal direction, relative to said defined initial position in respect of the base (42, 142) of the block (23, 123).

15. A dowel according to claim 14 in combination with any of claims 10 to 13, **characterised in that** said first section (43, 143) of the base (42, 142) of the block (23, 123) coincides longitudinally with said longitudinally end section (53, 153) adjacent the heel (49, 149) of the block (23, 123).

16. A dowel according to any of claims 1 to 15, **characterised in that** the means (21, 160) for receiving a clamping member (9, 165) comprise screw thread (21) on the outer peripheral surface (16) of the mandrel (11) in said proximal end section (13) thereof.

17. A dowel according to any of claims 1 to 15, **characterised in that** the means (21, 160) for receiving a clamping member (9, 165) comprise a tapped longitudinal hole (160) formed coaxially in the proximal end (112) of the mandrel (111).

18. A dowel according to claim 17, **characterised in that** it has means (165) designed temporarily to form a stop (167) to limit the longitudinal insertion of the mandrel (111) in said longitudinal direction (125), inside the blind hole (103) in the first element (104), said stop being positioned to project transversely from the cylindrical surface (138) jacketing the outer peripheral surface (116) of the mandrel (111), which is turned in said longitudinal direction (125) and has a predetermined longitudinal offset (L4), less than the longitudinal dimension of the bottom (129) of the recess (22), from the proximal end (112) of the mandrel (111).

19. A dowel according to claim 18, **characterised in that** the clamping member (165) has a threaded longitudinal shank (164), screwed coaxially into the tapped hole (160) in the proximal end (112) of the mandrel (111), and a transverse head (166) rigidly connected to the shank (164) and with transverse dimensions greater than the diameter of said cylindrical jacketing surface (38), and that means (168, 170, 171) are provided for indexing a longitudinal offset corresponding to said predetermined longitudinal offset (L4), between said head (166) and the proximal end (112) of the mandrel (111), in such a way that said head (166) temporarily forms said stop (167).

20. A dowel according to claim 19, **characterised in that** the indexing means (168, 170, 171) have a mark (168) on said threaded shank (164), coinciding with the proximal end (112) of the mandrel (111) when said shank (164) has said defined longitudinal offset (L4) from the end (112).

21. A dowel according to claim 19 or 20, **characterised in that** the indexing means (168, 170, 171) have a crosspiece (170, 171), which is engaged and held on said shank (164) between said head (166) and the proximal end ( 112) of the mandrel (111) and which has a longitudinal dimension corresponding to said defined longitudinal offset (L4), said crosspiece (170, 171) being capable of retracting or being retracted, preferably without unscrewing the clamping member (165) relative to the mandrel (111) from a relative position in which the crosspiece (170, 171) bears against the proximal end (112) of the mandrel (111) in said longitudinal direction (125) and against said head (166) in the opposite direction (126) to said longitudinal direction (125), and in which said head (166) and the proximal end (112) of the mandrel (111) have said predetermined longitudinal offset (L4) between them.

22. A dowel according to claim 21, **characterised in that** said crosspiece (170) coaxially surrounds said shank (164) between said head (166) and the proximal end (112) of the mandrel (111), and that it is longitudinally compressible, particularly between said head (166) and the proximal end (112) of the mandrel (111), by the effect of screwing the clamping member (165) relative to the mandrel (111) from said relative position.

23. A dowel according to claim 22, **characterised in that** said crosspiece (170) is a helical spring which is resiliently longitudinally compressible from a state of rest in which it has said longitudinal dimension (L4) in the absence of any longitudinal stress.

24. A dowel according to claim 21, **characterised in that** said crosspiece (171) coaxially surrounds said shank (164) between said head (166) and the proximal end (112) of the mandrel (111), that it is rigid in a longitudinal direction, and that it is open or capable of being opened transversely over the whole of said longitudinal dimension (L4) and is transversely deformable in the expanding direction to enable it to be detached from said shank (164) by a relative transverse movement.

25. A dowel according to claim 24, **characterised in that** said crosspiece (171) is a clip which can be resiliently expanded transversely from a state in which it is fitted onto said shank (164).

## Patentansprüche

1. Dübel (1, 101) zum Einsetzen in ein längliches Sackloch (3, 103) in einem ersten Element (4, 104), um an diesem ein zweites Element (8) zu verankern, aufweisend:
- einen Kern (11, 111) mit einer Längsachse (2, 102) sowie mit einem nahen Querende (12, 112) und einem fernen Querende (14, 114), ausgebildet, um jeweils der Außenseite und der Innenseite des Lochs (3, 103) zugewandt zu sein, und mit einer äußeren Umfangsfläche (16, 116) von normaler Zylinderform, die durch Umlauf um die Achse (2, 102) erzeugt ist und sich in Längsrichtung vom einen des nahen und fernen Endes (12, 14, 112, 114) zum anderen erstreckt, mit in einem nahen Endabschnitt (13, 113) des Kerns (11, 111) vorgesehenen Mitteln (21, 160) zur Aufnahme eines Elements (9, 165) zum Pressen des zweiten Elements (8) gegen das erste Element (4, 104) in Längsrichtung und mit einer Aussparung (22, 122) in der äußeren Umfangsfläche (16, 116), die an einem fernen Endabschnitt (15, 115) des Kerns (11, 111) vorgesehen ist und die von einer in Längsrichtung (25, 125) vom nahen Ende (12, 112) zum fernen Ende (14, 114) weisenden, horizontalen Schulter (28, 128) und von einem Boden (29, 129) gebildet wird, der von der Achse (2, 102) weg weist und sich in der Längsrichtung (25, 125) von der Schulter (28, 128) allmählich von der Achse (2, 102) weg erstreckt,
- einen keilförmigen Block (23, 123), der in Eingriff mit der Aussparung (22, 122) steht und der von einer Basis (42, 142), die der Achse (2, 102) zugewandt ist und mit gleitender Bewegung auf dem Boden (29, 129) der Aussparung (22, 122) lagert, einem Querabschnitt (49, 149), der in entgegengesetzter Richtung (26, 126) zur Längsrichtung (25, 125) gerichtet ist und sich in einer definierten Anfangsstellung des Blocks (23, 123) bezüglich dem Kern (11, 111) in Längsrichtung gegen die Schulter (28, 128) der Aussparung (22, 122) abstützt, und einem Rücken (51, 151) gebildet ist, der in Richtung weg von der Achse (2, 102) gerichtet ist und eine normale Form hat, die zumindest in etwa der zylindrischen Fläche (38, 138), die im definierten Ausgangszustand die äußere Umfangsfläche (16, 116) des Kerns (11, 111) umhüllt, angepasst ist, jedoch mindestens einen Zahn (56, 156) zur Verankerung im ersten Element (4, 104) hat, der in der definierten Ausgangsstellung einen Quervorsprung von der zylindrischen Hüllfläche (38, 138) bildet,
- Mittel (58, 158) zum zeitweiligen Halten des Blocks (23, 123) in der definierten Ausgangsstellung, die die Verschiebung des Blocks (23, 123) aus der definierten Ausgangsstellung in Längsrichtung (25, 125) bezüglich dem Kern (11, 111) gestatten, um den Quervorsprung des mindestens einen Verankerungszahns (56, 156) relativ zur zylindrischen Hüllfläche (38, 138) durch eine bei der Verschiebung stattfindende Nockenwirkung infolge der Lagerung der Basis (42, 142) des Blocks (23, 123) auf dem Boden (29, 129) der Aussparung (22, 122) zu verstärken,
- **dadurch gekennzeichnet, dass** die Aussparung (22, 122) sich in Längsrichtung im Abstand vom fernen Ende (14, 114) des Kerns (11, 111) befindet und dass die äußere Umfangsfläche (16, 116) zwischen der Aussparung (22, 122) und dem fernen Ende (14, 114) des Kerns (11, 111) eine längliche ebene Fläche (37, 137) hat, die in Richtung der Achse (2, 102) von der zylindrischen Hüllfläche (38, 138) zurück versetzt ist und in Längsrichtung (25, 125) in den Boden (29, 129) der Aussparung (22, 122) übergeht.

2. Dübel nach Anspruch 1, **dadurch gekennzeichnet, dass** sich die ebene Fläche (37, 137) in der Längsrichtung (25, 125) zum fernen Ende (14, 114) des Kerns (11, 111) erstreckt.

3. Dübel nach Anspruch 1 oder 2, **dadurch gekennzeichnet, dass** die Längsrichtungsabmessungen des Blocks (23, 123) kleiner sind als die der Aussparung (22, 122) und der Block in Längsrichtung (25, 125) in einer in dieser Richtung (25, 125) gerichteten Querfläche (48, 148) endet.

4. Dübel nach einem der Ansprüche 1 bis 3, **dadurch gekennzeichnet, dass** der Kern (11, 111) aus weichem Stahl besteht.

5. Dübel nach einem der Ansprüche 1 bis 4, **dadurch gekennzeichnet, dass** der Block (23, 123) aus weichem Stahl besteht.

6. Dübel nach einem der Ansprüche 1 bis 5, **dadurch gekennzeichnet, dass** der mindestens eine Verankerungszahn (56, 156) die Form einer kreisbogenförmig um die Achse (2, 102) verlaufenden Rippe (56, 156) hat.

7. Dübel nach Anspruch 6, **dadurch gekennzeichnet, dass** der Rücken (51, 151) des Blocks (23, 123) mehrere derartiger Rippen (56, 156) aufweist, die in Längsrichtung verteilt und durch Quernuten (37) getrennt sind, die sich durch Ausbildung der Rippen (56, 156) durch plastische Verformung des Materials des Blocks (23, 123) ergeben.

8. Dübel nach einem der Ansprüche 1 bis 7, **dadurch gekennzeichnet, dass** der mindestens eine Verankerungszahn (56, 156) einen in Längsrichtung begrenzten Abschnitt (52, 53, 152, 153) frei lässt, der sich am Rücken (51, 151) des Blocks (23, 123) kreisbogenförmig um die Achse (2, 102) erstreckt.

9. Dübel nach Anspruch 8, **dadurch gekennzeichnet, dass** die Mittel (58, 158) zum zeitweiligen Halten des Blocks (23, 123) in der definierten Ausgangsstellung ein Querband (58, 158) aufweisen, das insbesondere elastisch verlängerbar ist und das den mindestens einen länglichen begrenzten Abschnitt (52, 53, 152, 153) und einen entsprechenden länglichen Abschnitt der äußeren Umfangsfläche (16, 116) des Kerns (11, 111) umgibt.

10. Dübel nach Anspruch 8 oder 9, **dadurch gekennzeichnet, dass** der mindestens eine Verankerungszahn (56, 156) mindestens einen länglichen Endabschnitt (53, 153) des Rückens (51, 151) des Blocks (23, 123) frei lässt, der sich benachbart zum Querabschnitt (49, 149) des Blocks (23, 123) kreisbogenförmig um die Achse (2, 102) erstreckt.

11. Dübel nach Anspruch 10, **dadurch gekennzeichnet, dass** der mindestens eine Verankerungszahn (56, 156) auch mindestens einen in Längsrichtung gegenüberliegenden, sich kreisbogenförmig um die Achse (2, 102) erstreckenden länglichen Endabschnitt (52, 152) des Rückens (51, 151) des Blocks (23, 123) frei lässt.

12. Dübel nach Anspruch 9 in Kombination mit Anspruch 10 oder 11, **dadurch gekennzeichnet, dass** das Band (53, 153) den länglichen Endabschnitt (53, 153) benachbart zum Querabschnitt (49, 149) des Blocks (23, 123) und zum entsprechenden länglichen Abschnitt der äußeren Umfangsfläche (16, 116) des Kerns (11, 111) umgibt.

13. Dübel nach Anspruch 12, **dadurch gekennzeichnet, dass** das Band (58, 158) in der definierten Ausgangsstellung um den Querabschnitt (49, 149) des Blocks (23, 123) und die Schulter (28, 128) der Aussparung (22, 122) und auch um einen in Längsrichtung der Aussparung (22, 122) benachbarten Abschnitt der äußeren Umfangsfläche (16, 116) des Kerns (11, 111) verläuft.

14. Dübel nach einem der Ansprüche 1 bis 13, **dadurch gekennzeichnet, dass** der Boden (29, 129) der Aussparung (22, 122) und die Basis (42, 142) des Blocks (23, 123) jeweils zwei Abschnitte aufweisen, nämlich einen parallel zur Achse (2, 102) und in Längsrichtung benachbart zur Schulter (28, 128) bzw. zum hinteren Bereich (49, 149) verlaufenden ersten ebenen Abschnitt (30, 43, 130, 143) und einen sich bezüglich der definierten Ausgangsstellung bezogen auf die Basis (42, 142) des Blocks (23, 123) in Längsrichtung allmählich von der Achse (2, 102) weg erstreckenden zweiten ebenen Abschnitt (31, 44, 131, 144).

15. Dübel nach Anspruch 14 in Kombination mit einem der Ansprüche 10 bis 13, **dadurch gekennzeichnet, dass** der erste ebene Abschnitt (43, 143) der Basis (42, 142) des Blocks (23, 123) in Längsrichtung mit dem länglichen Endabschnitt (53, 153) benachbart zum hinteren Bereich (49, 149) des Blocks (23, 123) zusammenfällt.

16. Dübel nach einem der Ansprüche 1 bis 15, **dadurch gekennzeichnet, dass** die Mittel (21, 160) zur Aufnahme eines Klemmelements (9, 165) im nahen Endabschnitt (13) des Kerns (11) auf dessen äußerer Umfangsfläche ein Gewinde (21) aufweisen.

17. Dübel nach einem der Ansprüche 1 bis 15, **dadurch gekennzeichnet, dass** die Mittel (21, 160) zur Aufnahme eines Klemmelements (9, 165) eine koaxial im nahen Ende (112) des Kerns (111) vorgesehene Längs-Gewindebohrung (160) aufweisen.

18. Dübel nach Anspruch 17, **dadurch gekennzeichnet, dass** im Inneren des Sacklochs (103) im ersten Element (104) Mittel vorgesehen sind, die zur zeitweiligen Bildung eines Anschlags (167) zur Begrenzung des Einsetzens des Kerns (111) in Längsrichtung (125) ausgebildet sind, wobei der Anschlag so positioniert ist, dass er sich quer von der die äußere Umfangsfläche (116) des Kerns (111) umhüllenden Zylinderfläche (138) erstreckt, wobei der Anschlag in die Längsrichtung (125) gerichtet ist und einen vorbestimmten Längsversatz (L4) vom nahen Ende (112) des Kerns (111) hat, der geringer ist als die Längsabmessung des Bodens (129) der Aussparung (22).

19. Dübel nach Anspruch 18, **dadurch gekennzeichnet, dass** das Klemmelement (165) einen länglichen Gewindeschaft (164), der koaxial in die im nahen Ende (112) des Kerns (111) vorgesehene Gewindebohrung (160) eingeschraubt ist, und einen Querkopf (166) hat, der starr mit dem Schaft (164) verbunden ist und Querabmessungen aufweist, die größer sind als der Durchmesser der zylindrischen Hüllfläche (38), und dass Mittel (168, 170, 171) zum schrittweisen Versetzen zwischen Kopf (166) und nahem Ende (112) des Kerns (111) entsprechend dem vorbestimmten Längsversatz (L4) vorgesehen sind, so dass der Kopf (166) zeitweise den Anschlag (167) bildet.

20. Dübel nach Anspruch 19, **dadurch gekennzeichnet, dass** die Versetzmittel (168, 170, 171) eine Markierung (168) auf dem Gewindeschaft (164) aufweisen, die mit dem nahen Ende (112) des Kerns (111) zusammenfällt, wenn der Schaft (164) vom Ende (112) den definierten Längsversatz (L4) hat.

21. Dübel nach Anspruch 19 oder 20, **dadurch gekennzeichnet, dass** die Verstellmittel (168, 170, 171) ein Querstück (170, 171) aufweisen, das in Eingriff mit dem Schaft (164) steht und an diesem zwischen dem Kopf (166) und dem nahen Ende (112) des Kerns (111) gehalten ist und das eine Längsabmessung entsprechend dem definierten Längsversatz (L4) hat, wobei sich das Querstück (170, 171), vorzugsweise ohne Abschrauben des Klemmelements (165), bezüglich dem Kern (111) aus einer relativen Stellung, in der das Querstück (170, 171) in Längsrichtung (125) am nahen Ende (112) des Kerns (111) und in Richtung (126) entgegen der Längsrichtung (125) am Kopf (166) anliegt und in der der Kopf (166) und das nahe Ende (112) des Kerns (111) zwischen sich den vorbestimmten Längsversatz (L4) haben, zurückziehen kann oder zurückgezogen werden kann.

22. Dübel nach Anspruch 21, **dadurch gekennzeichnet, dass** das Querstück (170) den Schaft (164) zwischen dem Kopf (166) und dem nahen Ende (112) des Kerns (111) koaxial umgibt und dass es in Längsrichtung durch die Wirkung des Schraubens des Klemmelements (165) aus der relativen Stellung bezüglich dem Kern (111), insbesondere zwischen dem Kopf (166) und dem nahen Ende (112) des Kerns (111), zusammendrückbar ist.

23. Dübel nach Anspruch 22, **dadurch gekennzeichnet, dass** das Querstück (170) eine Schraubenfeder ist, die in Längsrichtung elastisch aus einem Ruhezustand, in dem sie bei Fehlen jeder Längsbelastung die Längsabmessung (L4) hat, zusammendrückbar ist.

24. Dübel nach Anspruch 21, **dadurch gekennzeichnet, dass** das Querstück (171) den Schaft (164) zwischen Kopf (166) und nahem Ende (112) des Kerns (111) koaxial umgibt, dass es in Längsrichtung starr ist und dass es quer über die gesamte Längsabmessung (L4) offen ist oder geöffnet werden kann und in Ausdehnungsrichtung quer verformbar ist, um es durch relative Querbewegung vom Schaft (164) zu lösen.

25. Dübel nach Anspruch 24, **dadurch gekennzeichnet, dass** das Querstück (171) ein Clip ist, der aus einem Zustand, in dem er auf den Schaft (164) passt, quer elastisch aufweitbar ist.

## Revendications

1. Cheville (1, 101) conçue pour être insérée dans un trou longitudinal borgne (3, 103) d'un premier élément (4, 104) afin de permettre à un deuxième élément (8) d'être ancré sur celle-ci et comprenant :
- un mandrin (11, 111) ayant un axe longitudinal (2, 102) et comprenant une extrémité proximale transversale (12, 112) et une extrémité distale transversale (14, 114) conçues pour être tournées respectivement vers l'extérieur et l'intérieur dudit trou (3, 103), une surface périphérique extérieure (16, 116) d'une forme cylindrique normale générée par une révolution autour de l'axe (2, 102) et s'étendant longitudinalement à partir d'une desdites extrémités proximales et distales (12, 14, 112, 114) jusqu'à l'autre, des moyens (21, 160) pour recevoir un organe (9, 165) afin de presser longitudinalement le deuxième élément (8) contre le premier élément (4, 104), prévus dans une section d'extrémité proximale (13, 113) du mandrin (11, 111), et une cavité (22, 122) dans ladite surface périphérique extérieure (16, 116), ménagée dans une section d'extrémité distale (15, 115) du mandrin (11, 111) et définie par un épaulement transversal (28, 128) tourné dans une direction longitudinale (25, 125) depuis l'extrémité proximale (12, 112) vers l'extrémité distale (14, 114) et par un fond (29, 129) tourné dans la direction opposée à l'axe (2, 102) et s'étendant graduellement, en s'éloignant de l'axe (2, 102), dans ladite direction longitudinale (25, 125) à partir de l'épaulement (28, 128) ;
- un bloc conformé en angle (23, 123), engagé dans la cavité (22, 122) et défini par une base (42, 142) tournée vers l'axe (2, 102), portant, avec un déplacement glissant, sur le fond de la cavité (22, 122) par un tenon transversal (49, 149), tourné dans la direction opposée (26, 126) à ladite direction longitudinale (25, 125), et portant longitudinalement contre l'épaulement (28, 128) de la cavité (22, 122) dans une position initiale définie du bloc (23, 123) relativement au mandrin (11, 111), et par une face dorsale (51, 151) tournée dans la direction opposée à l'axe (2, 102) et ayant une forme normale s'adaptant au moins approximativement avec une surface cylindrique (38, 138) enveloppant la surface périphérique extérieure (16, 116) du mandrin (11, 111) dans ladite position initiale définie, mais ayant au moins une dent (56, 156) pour l'ancrage dans le premier élément (4, 104), formant une projection transversale à partir de la surface enveloppante cylindrique (38, 138) dans ladite position initiale définie ;
- des moyens (58, 158) pour retenir momentanément le bloc (23, 123) dans ladite position initiale définie, permettant un glissement du bloc (23, 123) dans ladite direction longitudinale (25, 125) relativement au mandrin (11, 111), à partir de ladite position initiale définie, de manière à accentuer ladite projection transversale de la dent d'ancrage (56, 156), au moins au nombre de un, relativement à ladite surface enveloppante cylindrique (38, 138) par un effet de came résultant de l'appui de la base (42, 142) du bloc (23, 123) sur le fond (29, 129) de la cavité (22, 122) de façon glissante ;
- **caractérisé en ce que** la cavité (22, 122) est espacée longitudinalement de l'extrémité distale (14, 114) du mandrin (11, 111) et **en ce que** la surface périphérique extérieure (16, 116) du mandrin comporte une surface plane longitudinale (37, 137) entre la cavité (22, 122) et l'extrémité distale (14, 114) du mandrin (11, 111), la surface plane (37, 137) étant en retrait par rapport à ladite surface enveloppante cylindrique (38, 138) vers l'axe (2, 102) et rejoignant le fond (29, 129) de la cavité (22, 122) dans ladite direction longitudinale (25, 125).

2. Cheville selon la revendication 1, **caractérisée en ce que** la surface plane (37, 137) s'étend dans ladite direction longitudinale (25, 125) jusqu'à l'extrémité distale (14,114) du mandrin (11, 111).

3. Cheville selon la revendication 1 ou 2, **caractérisée en ce que** le bloc (23, 123) a des dimensions longitudinales inférieures à celles de la cavité (22, 122) et est défini dans ladite direction longitudinale (25, 125) par une face transversale (48, 148) tournée dans cette direction (25, 125).

4. Cheville selon une quelconque des revendications 1 à 3, **caractérisée en ce que** le mandrin (11, 111) est fait en acier doux.

5. Cheville selon une quelconque des revendications 1 à 4, **caractérisée en ce que** le bloc (23, 123) est fait en acier doux.

6. Cheville selon une quelconque des revendications 1 à 5, **caractérisée en ce que** l'au moins une dent d'ancrage (56, 156) a la forme d'une nervure (56, 156) selon un arc de révolution autour de l'axe (2, 102).

7. Cheville selon la revendication 6, **caractérisée en ce que** la face dorsale (51, 151) du bloc (23, 123) comporte une pluralité desdites nervures (56, 156), réparties longitudinalement et séparées par des rainures transversales (57) résultant du fait que les nervures (56, 156) sont ménagées par un écoulement plastique du matériau du bloc (23, 123).

8. Cheville selon une quelconque des revendications 1 à 7, **caractérisée en ce que** l'au moins une dent d'ancrage (56, 156) laisse libre au moins une section longitudinalement limitée (52, 53, 152, 153), selon un arc de révolution autour de l'axe (2, 102), de la face dorsale (51, 151) du bloc (23, 123).

9. Cheville selon la revendication 8, **caractérisée en ce que** les moyens (58, 158) pour maintenir momentanément le bloc (23, 123) dans ladite position initiale définie comprennent une bande transversale (58, 158), extensible, en particulier élastiquement, et entourant ladite au moins une section longitudinalement limitée (52, 53, 152, 153) et une section longitudinalement correspondante de la surface périphérique extérieure (16, 116) du mandrin (11, 111).

10. Cheville selon la revendication 8 ou 9, **caractérisée en ce que** l'au moins une dent d'ancrage (56, 156) laisse libre au moins une section d'extrémité longitudinale (53, 153) de la face dorsale (51, 151) du bloc (23, 123), selon un arc de révolution autour de l'axe (2, 102), adjacente au tenon (49, 149) du bloc (23, 123).

11. Cheville selon la revendication 10, **caractérisée en ce que** l'au moins une dent d'ancrage (56, 156) laisse également libre au moins une section d'extrémité longitudinale (52, 152) longitudinalement opposée de la face dorsale (51, 151) du bloc (23, 123), selon un arc de révolution autour de l'axe (2, 102).

12. Cheville selon la revendication 9, en combinaison avec la revendication 10 ou 11, **caractérisée en ce que** la bande (53, 153) entoure ladite section d'extrémité longitudinale (53, 153), adjacente au tenon (49, 149) du bloc (23, 123), et la section longitudinalement correspondante de la surface périphérique extérieure (16, 116) du mandrin (11, 111).

13. Cheville selon la revendication 12, **caractérisée en ce que** la bande (58, 158) passe par-dessus le tenon (49, 149) du bloc (23, 123) et l'épaulement (28, 128) de la cavité (22, 122), en passant également autour d'une section de la surface périphérique extérieure (16, 116) du mandrin (11, 111) longitudinalement adjacente à la cavité (22, 122), dans ladite position initiale définie.

14. Cheville selon une quelconque des revendications 1 à 13, **caractérisée en ce que** le fond (29, 129) de la cavité (22, 122) et la base (42, 142) du bloc (23, 123) comporte deux sections respectives, c'est-à-dire une première section plane (30, 43, 130, 143), parallèle à l'axe (2, 102) et longitudinalement adjacente à l'épaulement (28, 128) ou au tenon (49, 149), respectivement, et une deuxième section plane (31, 44, 131, 144) s'étendant graduellement en s'éloignant de l'axe (2, 102) dans ladite direction longitudinale, relativement à ladite position initiale définie par rapport à la base (42, 142) du bloc (23, 123).

15. Cheville selon la revendication 14 en combinaison avec une quelconque des revendications 10 à 13, **caractérisée en ce que** ladite première section (43, 143) de la base (42, 142) du bloc (23, 123) coïncide longitudinalement avec ladite section d'extrémité longitudinale (53, 153) adjacente au tenon (49, 149) du bloc (23, 123).

16. Cheville selon une quelconque des revendications 1 à 15, **caractérisée en ce que** les moyens (21, 160) pour recevoir un organe de serrage (9, 165) comprennent un pas de vis (21) sur la surface périphérique extérieure (16) du mandrin (11) dans ladite section d'extrémité proximale (13) de celui-ci.

17. Cheville selon une quelconque des revendications 1 à 15, **caractérisée en ce que** les moyens (21, 160) pour recevoir un organe de serrage (9, 165) comprennent un trou longitudinal effilé (160) ménagé de façon coaxiale dans l'extrémité proximale (112) du mandrin (111).

18. Cheville selon la revendication 17, **caractérisée en ce qu'**elle comporte des moyens (165) conçus pour former momentanément une butée (167) afin de limiter l'insertion longitudinale du mandrin (111) dans ladite direction longitudinale (125), à l'intérieur dudit trou borgne (103) dans le premier élément (104), ladite butée étant positionnée pour se projeter transversalement à partir de la surface cylindrique (138) enveloppant la surface périphérique extérieure (116) du mandrin (111), qui est tournée dans ladite direction longitudinale (125) et présente un décalage prédéterminé L4, inférieur à la dimension longitudinale du fond (129) de la cavité (22), à partir de l'extrémité proximale (112) du mandrin (111).

19. Cheville selon la revendication 18, **caractérisée en ce que** l'organe de serrage (165) comporte une tige longitudinale filetée (164), vissée coaxialement dans le trou effilé (160) à l'extrémité proximale (112) du mandrin (111), et une tête transversale (166), reliée rigidement à la tige (164) et ayant des dimensions transversales supérieures au diamètre de ladite surface enveloppante cylindrique (38), et **en ce que** des moyens (168, 170, 171) sont prévus pour indexer un décalage longitudinal correspondant audit décalage longitudinal prédéterminé (L4), entre ladite tête (166) et l'extrémité proximale ( 112) du mandrin ( 111 ), de manière à ce que ladite tête (166) forme momentanément ladite butée (167).

20. Cheville selon la revendication 19, **caractérisée en ce que** les moyens d'indexation (168, 170, 171) comportent un repère (168) sur ladite tige filetée (164), coïncidant avec l'extrémité proximale (112) du mandrin (111) lorsque ladite tige (164) présente ledit décalage longitudinal défini (L4) à partir de l'extrémité (112).

21. Cheville selon la revendication 19 ou 20, **caractérisée en ce que** les moyens d'indexation (168, 170, 171) comportent une pièce transversale (170, 171), engagée et maintenue sur ladite tige (164) entre ladite tête (166) et l'extrémité proximale (112) du mandrin (111) et ayant une dimension longitudinale correspondant audit décalage longitudinal défini (L4), ladite pièce transversale (170, 171) étant susceptible de se rétracter ou d'être rétractée, de préférence sans dévisser l'organe de serrage 165 relativement au mandrin (111), à partir d'une position relative dans laquelle la pièce transversale (170, 171) porte contre l'extrémité proximale (112) du mandrin (111) dans ladite direction longitudinale (125) et contre ladite tête (166) dans la direction opposée (126) à ladite direction longitudinale (125) et dans laquelle ladite tête (166) et l'extrémité proximale (112) du mandrin (111) présentent entre-elles ledit décalage longitudinal prédéterminé (L4).

22. Cheville selon la revendication 21, **caractérisée en ce que** ladite pièce transversale (170) entoure coaxialement ladite tige (164) entre ladite tête (166) et l'extrémité proximale (112) du mandrin (111) et **en ce qu'**elle est longitudinalement, en particulier entre ladite tête (166) et l'extrémité proximale (112) du mandrin (111), par l'effet du vissage de l'organe de serrage (165) relativement au mandrin (111) depuis ladite position relative.

23. Cheville selon la revendication 22, **caractérisée en ce que** ladite pièce transversale (170) est un ressort hélicoïdal longitudinalement compressible de façon résiliente, à partir d'une condition de repos dans laquelle il présente ladite dimension longitudinale (L4) en l'absence de contraintes longitudinales quelles qu'elles soient.

24. Cheville selon la revendication 21, **caractérisée en ce que** ladite pièce transversale (171) entoure coaxialement ladite tige (164) entre ladite tête (166) et l'extrémité proximale (112) du mandrin (111), **en ce qu'**elle est rigide dans une direction longitudinale et **en ce qu'**elle est ouverte ou susceptible d'être ouverte transversalement sur la totalité de ladite dimension longitudinalement (L4) et est transversalement déformable dans la direction d'expansion pour lui permettre d'être détachée de ladite tige (164) par un déplacement transversal relatif.

25. Cheville selon la revendication 24, **caractérisée en ce que** ladite pièce transversale (171) est une attache pouvant être expansée de façon résiliente transversalement à partir d'une condition dans laquelle elle est ajustée sur ladite tige (164).
